# EUROPEAN PATENT APPLICATION

(11) **EP 2 124 172 A1**
(43) Date of publication of application: **25.11.2009**
(21) Application number: 08710562.3
(22) Date of filing: 22.01.2008
(51) Int. Cl.: G06K 19/073, G06F 21/06

(54) **IC CARD AND METHOD FOR AUTHENTICATING IC CARD**

(30) Priority: 23.01.2007 JP 2007012885
(71) Applicant: Kabushiki Kaisha Toshiba, Minato-ku Tokyo 105-8001 (JP)
(72) Inventor: TOMOEDA, Yuuki, Tokyo 105-8001 (JP)
(74) Representative: Joly, Jean-Jacques
(86) International application number: PCT/JP2008/050781
(87) International publication number: WO 2008/090874

(57) **Abstract**

An IC card (1) has a CPU (10) which performs various operation processing, a data memory (12) which stores internal data, and a working memory (11) which stores the results of the processing. The CPU (10) performs first operation processing on the internal data stored in the data memory (12) and predetermined data for conversion, stores data for collation obtained by the first operation processing on the internal data and the data for conversion in a working memory (11), performs second operation processing corresponding to the first operation processing on external data received from the external device and the data for collation stored in the working memory (11), and collates data obtained by the second operation processing with the data for conversion.

## Description

### Technical Field

The present invention relates to a tamper resisting technique in portable electronic devices such as IC cards.

### Background Art

Conventionally, in IC cards, data, such as personal information, whose rewriting is not allowed without permission are held, encrypted, or decrypted. For this reason, data stored in IC cards are protected by access right for each direction or file so as not to be output to the outside without authorization.

However, there is a possibility that the contents of encryption processing or an encryption key is presumed by observing the power consumption when encryption processing is being performed in an IC card and analyzing the observations. For example, the power consumption can be examined by measuring changes in the voltage between the Vcc and ground terminals of the IC card using an oscilloscope. A technique to take information out of the IC card by observing the power consumption in this way is referred to as power analysis. As a technique to prevent the leakage of information through the power analysis, for example, a proposal has been made to make uniform changes in the number of inverted bits (hamming distance) following changes in a program counter (see JP-A No. 2004-126841 (KOKAI)). However, since techniques to decipher security information and the like without authorization are becoming advanced day by day, demands have called for more secure tamperproof IC cards.

### Disclosure of Invention

An object of the invention is to provide an IC card having tamper resistance which does not allow security information to be decoded without authorization, and an authentication processing method in the IC card.

An IC card according to an aspect of the present invention comprises: an interface section for communications with an external device; a first memory section which stores internal data; a first operation section which performs first operation processing on the internal data stored in the first memory section and data for conversion; a second memory section which stores the result of operations on the internal data and the data for conversion obtained by the first operation processing in the first operation section as data for collation; a second operation section which performs second operation processing corresponding to the first operation processing by the first operation section on external data received by the interface section from the external device and the data for collation stored in the second memory section; and a collation section which collates the data obtained by the second operation processing in the second operation section with the data for collation.

An authentication processing method for use in an IC card according to an aspect of the present invention comprises: performing first operation processing on internal data stored in a first memory section and data for conversion; storing the result of operations on the internal data and the data for conversion obtained by the first operation processing in a second memory section as data for collation; performing second operation processing on external data received from an external device and the data for collation stored in the second memory section, the second operation processing corresponding to the first operation processing; and collating data obtained by the second operation processing with the data for conversion.

### Brief Description of Drawings

FIG. 1 is a schematic diagram of an IC card according to an embodiment of the present invention;
FIG. 2 shows an exterior view of a contact-type IC card;
FIG. 3 is a diagram for use in explanation of a non-contact-type IC card;
FIG. 4 is a flowchart illustrating first authentication processing;
FIG. 5 is a flowchart illustrating second authentication processing; and
FIG. 6 is a flowchart illustrating third authentication processing.

### Best Mode for Carrying Out the Invention

The embodiments of the present invention will be described hereinafter with reference to the accompanying drawings.

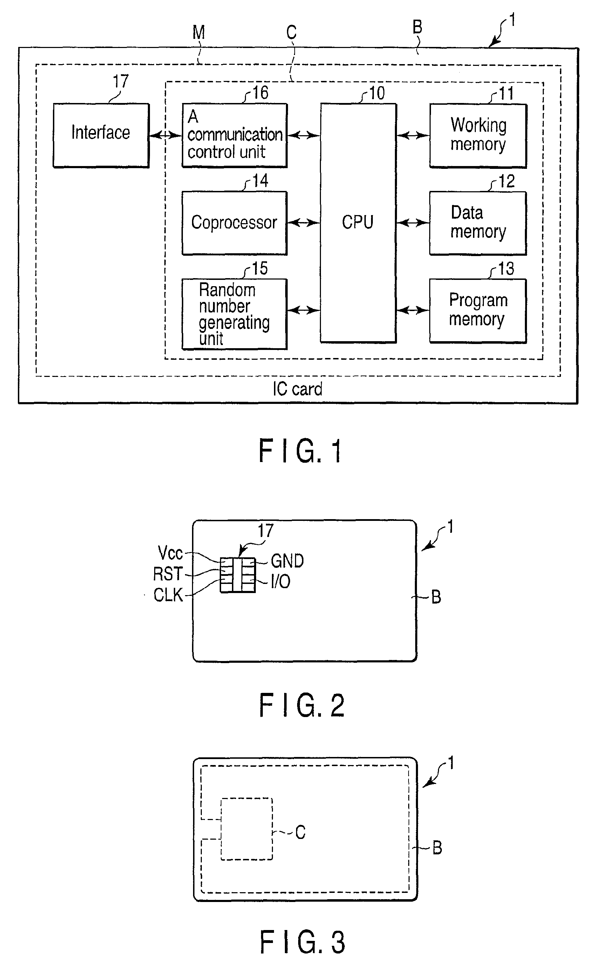

FIG. 1 is a block diagram of an IC card 1 as a portable electronic device according to an embodiment of the present invention and an IC card system including the IC card 1.

The IC card 1 goes into the operable state upon being supplied with power from an external device. The IC card 1 placed in the operable state performs various processes in response to commands from the external device. The external device supplies the IC card 1 with power for operating the IC card 1 and with commands to request the IC card 1 to perform various processes.

The IC card 1 may be a contact-type portable electronic device (contact-type IC card) which makes communications with the external device upon being physically brought into contact with the contact portion or a non-contact-type portable electronic device (non-contact-type IC card) which makes communications with the external device in the non-contact state through an antenna and a wireless communication unit. Furthermore, the IC card 1 may be a hybrid IC card (dual interface IC card) having communication facilities as a non-contact-type IC card and communication facilities as a non-contact-type IC card. Note that the non-contact-type IC card and the contact-type IC card are distinct from each other only in the method of communication with external devices and the like. For this reason, the authentication processes to be described later are equally applicable to the non-contact-type IC card and the contact-type IC card.

Next, the circuit arrangement of the IC card will be described.

As shown in FIG. 1, the IC card 1 is composed of a CPU (central processing unit) 10, a working memory 11, a data memory 12, a program memory 13, a coprocessor 14, a random number generating unit 15, a communication control unit 16, an interface 17, etc.

The CPU 10 exercises control over the whole of the IC card 1. The CPU 10 operates on the basis of a control program and control data stored in the program memory 13 or the data memory 12. In addition, the CPU 10 has a function to carry out logic operations or arithmetic operations. The CPU 10 carries out processing corresponding to commands applied from an external device by executing the control program in charge of basic operations. For example, if a command is given from the external device to write data into the data memory 12, then the CPU 10 carries out a process of writing data into the data memory 12. Furthermore, if a command is given from the external device to read data from the data memory 12, then the CPU 10 carries out a process of reading data from the data memory 12. Moreover, by executing a processing program installed according to a use of the IC card 1, the CPU 10 implements a process which meets that use.

The working memory 11 is comprised of a volatile memory (RAM: random access memory). The working memory 11 functions as a buffer memory to temporarily save data. For example, the working memory 11 temporarily saves data transmitted or received in a process of communicating with the external device. In addition, the working memory 11 is also used as a memory to temporarily hold various pieces of write data and the like. Furthermore, the working memory 11 is also stored with information to identify processing situations or setting information in the IC card 1.

The data memory (nonvolatile memory) 12 is a nonvolatile memory which can be written into. The data memory 12 is comprised of, for example, an EEPROM, a flash memory, or the like. The data memory 12 is stored with various pieces of information that meet the purpose of using the IC card 1 (applications, such as a processing program, operating data, etc.). In addition, the data memory 12 is also provided with a data table to store various pieces of setting information.

When the IC card 1 is used for a plurality of purposes of use, the data memory 12 is stored with a plurality of applications which meet these purposes of use. The applications which meet the purposes of use of the IC card 1 are stored in files, such as program files and data files, which are defined on the data memory 12 each of which corresponds to a respective one of the purpose of use. The file structure in the data memory 12 is based on, for example, ISO/IEC7816-4. That is, the data memory 12 of the IC card 1 is capable of storing various applications and various pieces of operational data. For example, when the IC card 1 is used as a credit card, the data memory 12 is stored with authentication information, such as a password, and identification information of the credit card.

The program memory 13 is comprised of a read only memory (ROM). The program memory 13 has been stored in advance with a control program for basic operations, control data, etc. The program memory 13 is stored in advance with a control program and control data which conform to the specifications of the IC card 1. For example, the CPU 10 performs processing corresponding to externally applied commands by the control program stored in the program memory 13.

The coprocessor 14 performs encryption processing. For example, the coprocessor 14 is comprised of an encryption-dedicated IC chip in order to perform operations necessary for encryption at a high speed. The coprocessor 14 carries out special operations for residual operations in RSA encryption or encryption processing, such as DES encryption. The function of encryption by the coprocessor 14 may be implemented by an operations circuit, such as the CPU 10, executing a control program.

The random number generating unit 15 generates random numbers as arbitrary data. The random number generating unit 15 is comprised of, for example, an IC chip. The function of generating random numbers by the random number generating unit 15 may be implemented by an operation circuit, such as the CPU 10, executing a program.

The communication control unit 16 controls data communications with an external device via the interface 17. For example, when the IC card 1 is a contact-type IC card, a contact-type communication function is implemented by a contact portion as the interface 17 and a communication control circuit as the communication control unit 16. When the IC card 1 is a non-contact-type IC card, a non-contact-type communication function is implemented by an antenna as the interface 17 and a modem circuit as the communication control unit 16.

The IC card 1 is formed such that a module M is embedded in a body B in the shape of a card. The module M is integrally formed such that one or more IC chips C and the interface 17 are connected. The IC chip C is composed of the CPU 10, the working memory 11, the data memory 12, the program memory 13, the coprocessor 14, the random number generating unit 15, the communication control unit 16, a power supply (not shown), etc.

FIG. 2 is an exterior view of a contact-type IC card as a form of the IC card 1. As shown in FIG. 2, the contact-type IC card is formed such that a contact portion as the interface 17 is exposed on the top of the body B. With the contact-type IC card, the module M having one or more IC chips connected to the exposed contact portion is built into the body B in the shape of a card.

The contact portion as the interface 17 of the contact-type IC card has a plurality of terminals as shown in FIG. 2. For example, the contact portion is provided with various terminals in positions defined in the ISO7816 standard (non-patent document 1). In the example of FIG. 2, the contact portion has a supply voltage terminal Vcc, a ground terminal GND, a reset terminal RST, an input/output terminal I/O, and a clock terminal CLK.

FIG. 3 shows a non-contact-type IC card as a form of the IC card 1. As shown in FIG. 3, with the non-contact-type IC card, such a module having one or more IC chips C and an antenna as the interface 17 as shown by broken lines is embedded in the body B in the shape of a card. Thereby, the non-contact-type IC card is adapted to process radio waves received by the antenna in the IC chip C.

Next, the operation of the IC card 1 thus configured will be described.

In the example authentication processing which follows, a description is given of authentication processing performed by the IC card 1 on the basis of authentication information, such as a password (identification number), which is given from an external device.

First, first authentication processing in the IC card 1 will be described.

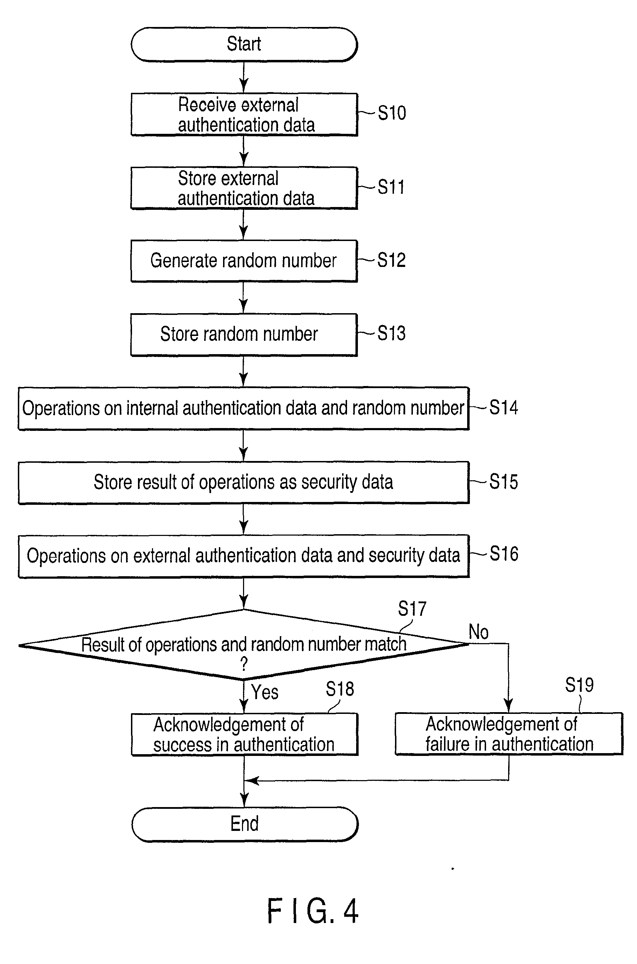

FIG. 4 is a flowchart illustrating the first authentication processing in the IC card 1.

The IC card 1 receives authentication data (external data for authentication) together with a command to request authentication processing from an external device (step S10). Then, the CPU 10 of the IC card 1 stores the received external authentication data in an internal memory, such as the working memory 11 (step S11). Upon storing the external authentication data, the CPU 10 generates a random number as data for conversion used in operation processing to be described later from the random number generating unit 15 (step S12). The CPU 10 stores the random number generated by the random number generating unit 15 in the internal memory, such as the working memory 11 (step S13).

Upon storing the random number in the working memory 11, the CPU 10 performs first operation processing on internal authentication data and the random number (step S14). For example, as the first operation processing logical operations, such as exclusive OR (XOR), AND, or OR operations, or algebraic operations are performed. When the result of the operations on the internal authentication data and the random number by the first operation processing (first operation result) is obtained, the CPU 10 stores the first operation result in the internal memory, such as the working memory 11, as security data (step S15).

Upon storing the security data, the CPU 10 performs second operation processing on the external authentication data received together with the command to request authentication and the security data (step S16). The second operation processing corresponds to the first operation processing in step S14. For example, when exclusive OR operations are performed on the internal data and the random number in step S14, exclusive OR operations are performed on the external data and the security data in the second operation processing in step S16.

When the result of the second operation processing in step S16 (the second operation result) is obtained, the CPU 10 makes a decision (collation) of whether or not the random number and the second operation result match (step S17). If the decision is that the random number and the second operation result match, then the CPU 10 takes it that the authentication for the external authentication data has resulted in success and then sends an acknowledgment of success in authentication to the command sending external device (step S18). If, on the other hand, the decision is that the random number and the second operation result do not match, then the CPU 10 takes it that the authentication for the external authentication data has resulted in failure and then sends an acknowledgment of failure in authentication to the command sending external device (step S19).

As described above, in the first authentication processing, the IC card 1 performs the first operation processing on the internal authentication data and the random number as conversion data. With the result of the operations on the internal authentication data and the random number as security data, the IC card 1 performs the second operation processing based on the external authentication data received from the external device and the security data. The IC card 1 decides the success or failure in authentication, depending on whether or not the result of operations on the external authentication data and the security data matches the random number.

Thereby, according to the first authentication processing, the internal and external authentication data as security information can be collated indirectly without using a direct collation method. As a result, it can be made difficult to deduce the internal and external authentication data, thus allowing the tamper resistance of the IC card to be increased.

Next, second authentication processing in the IC card 1 will be described.

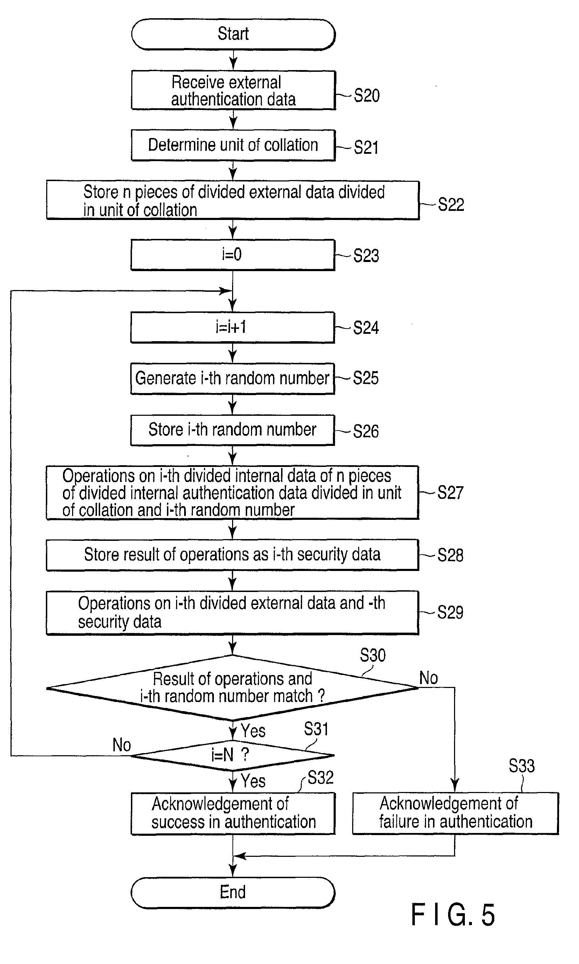

FIG. 5 is a flowchart illustrating the second authentication processing in the IC card 1.

The IC card 1 receives authentication data (external data for authentication) together with a command to request authentication processing from an external device (step S20). Then, the CPU 10 of the IC card 1 determines a unit of collation of the external and internal authentication data (the size of divided data to be collated) (step S21). The unit of collation can be determined in various ways. For example, the CPU 10 may directly choose a data size as a unit of collation from arbitrary values. The CPU 10 may choose a number by which the authentication data is divided from arbitrary values and determine the data size as a unit of collation on the basis of the chosen dividing number for the authentication data.

Further, the data size as the unit of collation can be chosen from arbitrary values. That is, the CPU 10 may divide the authentication data by a specific data size (for example, in units of one byte, two bytes, etc.) and set the result as a unit of collation. Alternatively, the authentication data may be divided in arbitrary data sizes (for example, two bytes, one byte, three bytes, and two bytes for 8-byte authentication data) and set each divided data as a unit of collation. The data size as a unit of collation or the dividing number may be determined on the basis of a random number generated by the random number generating unit 15. In the description which follows, the CPU 10 is assumed to select the dividing number (N) on the basis of a random number generated by the random number generating unit 15 and determines the data size as a unit of collation in accordance with the selected dividing number.

When the unit of collation is determined by the above processing, the CPU 10 stores data obtained by dividing the external authentication data received from the external device into N pieces in the unit of collation (hereinafter referred to as the divided external data) in the internal memory, such as the working memory 11 (step S22). Upon storing the N pieces of divided external data, the CPU 10 initializes a variable i (i = 0) (step S23) and then performs collation processing for each divided external data (steps S24 to S31).

That is, the CPU 10 first increments the variable i (i = i + 1) (step S24). Upon incrementing the variable i, the CPU 10 causes the random number generating unit 15 to generate a random number as conversion data (hereinafter referred to as the i-th random number) for collating the i-th pieces of divided internal and external data (step S25). Upon generating the i-th random number, the CPU 10 stores the i-th random number generated by the random number generating unit 15 in the internal memory, such as the working memory 11 (step S26).

Upon storing the i-th random number in the working memory 11, the CPU 10 performs first operation processing on the i-th divided internal data from the first divided data of the N pieces of data obtained by dividing the internal authentication data in the unit of collation (hereinafter referred to as the divided internal data) and the i-th random number (step S27). For example, as the first operation processing, logic operations, such as exclusive OR (XOR), AND, or OR operations, or algebraic operations are carried out. When the result of the operations on the i-th divided internal data and the i-th random number (the i-th first operation result) is obtained by the first operation processing, the CPU 10 stores the i-th first operation result in the internal memory, such as the working memory 11, as the i-th security data (step S28).

Upon saving the i-th security data, the CPU 10 performs second operation processing based on the i-th divided external data from the first divided data of the external authentication data and the i-th security data (step S29). This second operation processing corresponds to the first operation processing in step S27. For example, when exclusive OR operations are performed in step S27, exclusive OR operations are also performed in the second operation processing in step S29.

When the result of operations (the i-th second operation result) is obtained in the second operation processing in step S29, the CPU 10 makes a decision (collation) of whether or not the i-th random number and the i-th second operation result match (step S30). If the decision is that the i-th random number and the i-th second operation result match (YES in step S30), then the CPU 10 takes it that the collation of the i-th divided external data with the i-th divided internal data has resulted in success. In this case, the CPU 10 makes a decision of whether or not the variable i is N, in other words, whether or not the collation of all the divided external data has been completed (step S31).

If the decision is that the variable i is not N, that is, there are divided external data which have not yet been subjected to collation (NO in step S31), the CPU 10 returns to step S24 and repeats steps S24 through S31.

If, on the other hand, the decision is that the variable i is N, that is, the decision is that the collation of all the divided external and internal data has succeeded (YES in step S31), then the CPU 10 sends an acknowledgment of success in authentication to the command sending external terminal (step S32).

If the decision in step S30 is that the i-th random number and the i-th second operation result do not match (NO in step S30), then the CPU 10 takes it that the authentication of the external authentication data (the collation of the external authentication data with the internal authentication data) has failed and sends an acknowledgment of failure in authentication to the command sending external device (step S33).

In the second authentication processing, as described above, the IC card 1 determines a unit of collation of the external authentication data with the internal authentication data for each authentication processing. Upon determining the unit of collation, the IC card 1 divides each of the external and internal authentication data in the unit of collation. The IC card 1 combines in order each divided external data, obtained by dividing the external authentication data in the unit of collation, and each divided internal data, obtained by dividing the internal authentication data in the unit of collation, and performs collation of each pair of the external and internal divided data. Further, as the collation of each pair, the IC card 1 performs first operation processing on the internal divided data and a random number as conversion data. With the result of operations on the internal divided data and the random number as security data, the IC card 1 performs second operation processing on the external divided data and the security data. The IC card 1 makes a decision of whether or not the result of operations on the external divided data and the security data matches the random number. When the external and internal divided data in all pairs match, the IC card 1 decides that the external authentication data has matched the internal authentication data.

According to the second authentication processing, the external and internal authentication data divided in arbitrary units of collation can be collated by an indirect collation method. As a result, it becomes possible to make it difficult to deduce the internal and external authentication data, thus allowing the tamper resistance of the IC card to be increased.

Next, third authentication processing in the IC card 1 will be described.

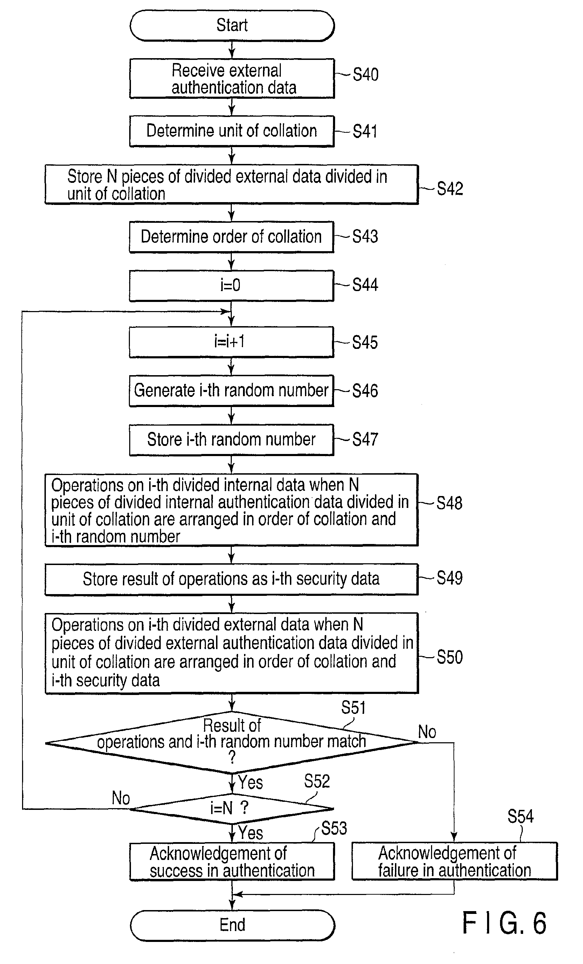

FIG. 6 is a flowchart illustrating the third authentication processing in the IC card 1.

The IC card 1 receives authentication data (external authentication data) together with a command to request authentication processing from an external device (step S40). Then, the CPU 10 of the IC card 1 determines a unit of collation of the external and internal authentication data (the size of data for collation) (step S41). To determine a unit of collation, the method described in the second authentication processing can be applied. In the third authentication processing, the unit of collation may be fixed.

Upon determining the unit of collation, the CPU 10 stores data obtained by dividing the external authentication data received from the external device into N pieces in the unit of collation (hereinafter referred to as the divided external data) in the internal memory, such as the working memory 11 (step S42). Upon storing the N pieces of divided external data, the CPU 10 further determines the order of collation for N pieces of divided external data (step S43). The order of collation can be chosen arbitrarily. For example, the CPU 10 determines the order of collation on the basis of a random number generated by the random number generating unit 15.

Upon determining the order of collation, the CPU 10 initializes a variable i (i = 0) (step S44) and then performs the processing of collation for each divided external data (steps S45 through S52). That is, the CPU 10 first increments a variable i (i = i + 1) (step S45). Upon incrementing the variable i, the CPU 10 causes the random number generating unit 15 to generate a random number as conversion data for carrying out the i-th collation processing (hereinafter that random number is referred to as the i-th random number) (step S25). Upon generating the i-th random number, the CPU 10 stores the i-th random number generated by the random number generating unit 15 in the internal memory, such as the working memory 11, (step S26).

Upon storing the i-th random number in the working memory 11, the CPU 10 performs first operation processing on divided internal data which is the i-th to be collated of N pieces of divided data obtained by dividing internal authentication data in the unit of collation (hereinafter referred to as divided internal data) and the i-th random number (step S48). Here, the divided internal data which is the i-th to be collated is the i-th divided internal data when the N pieces of divided internal data are arranged in the order of collation. In the first operation processing, logic operations, such as exclusive OR, AND, or OR operations, or algebraic operations are carried out. When the result of operations on the divided internal data which is the i-th to be collated and the i-th random number (the i-th first operation result) is obtained by the first operation processing, the CPU 10 stores the i-th first operation result in the internal memory, such as the working memory 11, as the i-th security data (step S49).

Upon saving the i-th security data, the CPU 10 performs second operation processing on the divided external data which is the i-th to be collated and the i-th security data (step S50). Here, the divided external data which is the i-th to be collated is the i-th divided external data when the N pieces of divided external data are arranged in the order of collation. This second operation processing in step S50 corresponds to the first operation processing in step S48. For example, when exclusive OR operations are performed in step S48, exclusive OR operations are also performed in the second operation processing in step S50.

When the result of operations (the i-th second operation result) is obtained in the second operation processing in step S50, the CPU 10 makes a decision (collation) of whether or not the i-th random number and the i-th second operation result match (step S51). If the decision is that the i-th random number and the i-th second operation result match (YES in step S51), then the CPU 10 takes it that the collation of the divided external data which is the i-th to be collated with the divided internal data which is the i-th to be collated has resulted in success. In this case, the CPU 10 makes a decision of whether or not the variable i is N, in other words, whether or not the collation of all the divided external data has been completed (step S52).

If the decision is that the variable i is not N, that is, there are divided external data which have not yet been subjected to collation (NO in step S52), the CPU 10 returns to step S45 and repeats steps S45 through S52.

If, on the other hand, the decision is that the variable i is N, that is, the decision is that the collation of all the divided external and internal data has succeeded (YES in step S52), then the CPU 10 sends an acknowledgment of success in authentication to the command sending external terminal (step S53).

If the decision in step S51 is that the i-th random number and the i-th second operation result do not match (NO in step S51), then the CPU 10 takes it that the authentication of the external authentication data (the collation of the external authentication data with the internal authentication data) has failed and sends an acknowledgment of failure in authentication to the command sending external device (step S54).

In the third processing, as described above, the IC card 1 divides each of the external authentication data and the internal authentication data in a specific unit of collation for each authentication processing and then chooses an order of collation of the divided external and internal data from arbitrary orders of collation. That is, the IC card 1 combines each divided external data with each divided internal data in order from the first divided data and performs collation of divided external and internal data for each pair in the order of collation. As the collation processing in each pair, the IC card 1 performs first operation processing on divided internal data and a random number as conversion data. With the result of operations on the divided internal data and the random number as security data, the IC card 1 performs second operation processing on divided external data and the security data. The IC card 1 makes a decision of whether or not the result of operations on the divided external data and the security data matches that random number. When the divided internal data and the divided external data in each pair match, the IC card 1 decides that the external authentication data and the internal authentication data have matched.

According to the third authentication processing, the external and internal authentication data divided in a specific unit of collation can be collated in an arbitrary order with an indirect collation method. As a result, it becomes possible to make it difficult to deduce the internal and external authentication data, thus allowing the tamper resistance of the IC card to be increased.

The present invention is not limited to the embodiments described above. The embodiments can be modified in various forms without departing from the scope thereof. For example, the first, second and third authentication processing contain inventions at various stages. For this reason, the first, second and third authentication processing can be practiced in combination. Several constituent elements or processing steps may be removed from all the constituent elements described above provided that problems described in the section of problems to be solved by the invention can be solved. The authentication processing methods described in the embodiments can be applied not only to IC cards but also to portable electronic devices, such as mobile phones, PDAs, mobile PCs, etc., and electronic computers.

### Industrial Applicability

According to the present invention, an IC card having tamper resistance such that security information cannot be deciphered illegally and authentication processing methods in the IC card can be provided.

## Claims

1. An IC card comprising:
an interface section for communications with an external device;
a first memory section which stores internal data;
a first operation section which performs first operation processing on the internal data stored in the first memory section and data for conversion;
a second memory section which stores the result of operations on the internal data and the data for conversion obtained by the first operation processing in the first operation section as data for collation;
a second operation section which performs second operation processing corresponding to the first operation processing by the first operation section on external data received by the interface section from the external device and the data for collation stored in the second memory section; and
a collation section which collates the data obtained by the second operation processing in the second operation section with the data for collation.

2. The IC card according to claim 1, further comprising an IC module having the interface section, the first memory section, the first operation section, the second memory section, the second operation section, and the collation section, and a body containing the IC card.

3. The IC card according to claim 1, wherein the first and the second operation processing are logic operations.

4. The IC card according to claim 3, wherein the first and the second operation processing are exclusive OR.

5. The IC card according to claim 1, wherein the data for conversion is set to a different value every time external data to be collated with the internal data is applied from the outside.

6. The IC card according to claim 1, further comprising a random number generating section which generates random numbers, and wherein the data for conversion is a random number which is generated by the random number generating section every time external data to be collated with the internal data is applied from the outside.

7. The IC card according to claim 1, further comprising a collation unit determining section which determines a unit of collation for dividing each of the external data and the internal data, and wherein the first operation section, the second operation section and the collation section perform the processing on each of pairs of divided internal data and divided external data obtained by combining each divided internal data, obtained by dividing the internal data in the unit of collation, and each divided internal data, obtained by dividing the external data in the unit of collation, in order.

8. The IC card according to claim 1, further comprising an order determining section which determines the order of collation for pairs of divided internal data and divided external data obtained by combining each divided internal data, obtained by dividing the internal data in a predetermined unit of collation, and each divided external data, obtained by dividing the external data in the unit of collation, in order, and wherein the first operation section, the second operation section and the collation section perform the processing on each of pairs of divided internal data and divided external data in the order of collation determined by the order determining section.

9. The IC card according to claim 1, further comprising a collation unit determining section which determines a unit of collation for dividing each of the external data and the internal data, and an order determining section which determines the order of collation for pairs of divided internal data and divided external data obtained by combining each divided internal data, obtained by dividing the internal data in the unit of collation, and each divided external data, obtained by dividing the external data in the unit of collation, in order, and wherein the first operation section, the second operation section and the collation section perform the processing on each of the pairs of divided internal data and divided external data in the order of collation determined by the order determining section.

10. An authentication processing method for use in an IC card comprising:
performing first operation processing on internal data stored in a first memory section and data for conversion;
storing the result of operations on the internal data and the data for conversion obtained by the first operation processing in a second memory section as data for collation;
performing second operation processing on external data received from an external device and the data for collation stored in the second memory section, the second operation processing corresponding to the first operation processing; and
collating data obtained by the second operation processing with the data for conversion.
